# EUROPEAN PATENT APPLICATION

(11) **EP 4 811 198 A1**
(43) Date of publication of application: **23.09.2026**
(21) Application number: 25186870.9
(22) Date of filing: 02.07.2025
(51) Int. Cl.: G06F 21/60, G06F 3/12, H04N 1/44, H04W 12/06, G06F 21/31, H04L 9/32

(54) **INFORMATION PROCESSING SYSTEM, PROGRAM, AND INFORMATION PROCESSING METHOD**

(30) Priority: 17.03.2025 JP 2025042761
(71) Applicant: FUJIFILM Business Innovation Corp., Minato-ku Tokyo (JP)
(72) Inventor: HARADA, Masahiko, Yokohama-shi, Kanagawa (JP); MORI, Atsushi, Yokohama-shi, Kanagawa (JP); YASUKAWA, Kiyoshi, Yokohama-shi, Kanagawa (JP); TAGUCHI, Yusuke, Yokohama-shi, Kanagawa (JP); SHINADA, Akira, Yokohama-shi, Kanagawa (JP); ONOZAWA, Yuji, Yokohama-shi, Kanagawa (JP)
(74) Representative: Becker Kurig & Partner Patentanwälte mbB

(57) **Abstract**

An information processing system includes: a processor configured to: receive a connection request from an information device possessed by a user who temporarily uses the information device; and perform an authentication operation in a case where the connection request received from the information device includes an authentication code.

## Description

### BACKGROUND OF THE INVENTION

### (i) Field of the Invention

The present disclosure relates to an information processing system, a program, and an information processing method.

### (ii) Description of Related Art

For example, JP2014-128928A discloses an image forming apparatus including storage means that stores information including specific information for specifying the image forming apparatus, which is used for communicating with the image forming apparatus, scan image generation means that generates a scan image scannable by a mobile terminal by using the information in response to a direct operation on the image forming apparatus by a user, display means that displays the generated scan image, reception means that receives an authentication request including authentication information for authenticating the user, which is transmitted in accordance with scanning of the scan image by the mobile terminal, authentication control means that performs authentication control by using the authentication information, and login control means that controls a login to the image forming apparatus in a case where authentication is obtained by the authentication control means.

### SUMMARY OF THE INVENTION

An object of the present disclosure is to provide an information processing system capable of performing an authentication operation on a temporary user whose user authorization is not stored in the information processing system and cannot be acquired from an outside.

According to a first aspect of the present disclosure, there is provided an information processing system including: a processor configured to: receive a connection request from an information device possessed by a user who temporarily uses the information device; and perform an authentication operation in a case where the connection request received from the information device includes an authentication code.

According to a second aspect of the present disclosure, in the information processing system according to the first aspect of the present disclosure, the processor may be configured to: receive the connection request encrypted by the information device; and decrypt the connection request to check the authentication code included in the connection request.

According to a third aspect of the present disclosure, in the information processing system according to the second aspect of the present disclosure, the processor may be configured to: in a case where a synchronization notification is received from the information device, notify the information device of a public key to be used for encryption.

According to a fourth aspect of the present disclosure, in the information processing system according to the second aspect or the third aspect of the present disclosure, the processor may be configured to: receive a data string in which another data string included in the connection request is coupled with the authentication code, as the connection request.

According to a fifth aspect of the present disclosure, in the information processing system according to any one of the first aspect to the fourth aspect of the present disclosure, the processor may be configured to: in a case where the authentication operation is executed, store specific information for specifying the user.

According to a sixth aspect of the present disclosure, in the information processing system according to any one of the first aspect to the fifth aspect of the present disclosure, the processor may be configured to: execute a different authentication operation based on the authentication code included in the connection request.

According to a seventh aspect of the present disclosure, in the information processing system according to the sixth aspect of the present disclosure, the processor may be configured to: determine a process that is available to the user, based on the authentication code included in the connection request.

According to an eighth aspect of the present disclosure, there is provided a program causing a processor to execute: receiving a connection request from an information device possessed by a user who temporarily uses the information device; and performing an authentication operation in a case where the connection request received from the information device includes an authentication code.

According to a ninth aspect of the present disclosure, there is provided an information processing method including: receiving a connection request from an information device possessed by a user who temporarily uses the information device; and performing an authentication operation in a case where the connection request received from the information device includes an authentication code.

With the information processing system according to the first aspect of the present disclosure, it is possible to perform an authentication operation for the temporary user whose user authorization is not stored in the information processing system and cannot be acquired from an outside.

With the information processing system according to the second aspect of the present disclosure, a security level for the authentication code included in the connection request is improved.

With the information processing system according to the third aspect of the present disclosure, a communication for obtaining key information to be used for the decryption is not necessary.

With the information processing system according to the fourth aspect of the present disclosure, it is possible to improve the security level for the authentication code of the information processing system, as compared with a case where the authentication code and the other data string are received in a state in which the authentication code and the other data string are separable.

With the information processing system according to the fifth aspect of the present disclosure, it is possible to perform the authentication operation according to a use mode, as compared with a case where the specific information is not stored.

With the information processing system according to the sixth aspect of the present disclosure, it is possible to improve the security level of the information processing system, as compared with a case where the authentication operation corresponding to the authentication code is one.

With the information processing system according to the seventh aspect of the present disclosure, it is possible to set an authority according to the user who uses the information processing system.

With the program according to the eighth aspect of the present disclosure, it is possible to cause the processor to perform the authentication operation for the temporary user whose user authorization is not stored in the information processing system and cannot be acquired from the outside.

According to the information processing method according to the ninth aspect of the present disclosure, it is possible to cause the processor to perform the authentication operation for the temporary user whose user authorization is not stored in the information processing system and cannot be acquired from the outside.

### BRIEF DESCRIPTION OF THE DRAWINGS

Exemplary embodiment(s) of the present invention will be described in detail based on the following figures, wherein:
Fig. 1 is a schematic diagram illustrating a service providing system according to a first exemplary embodiment of the present disclosure;
Fig. 2 is a diagram illustrating a configuration of a multifunction peripheral according to the first exemplary embodiment of the present disclosure;
Fig. 3 is a diagram illustrating a configuration of a mobile device according to the first exemplary embodiment of the present disclosure;
Fig. 4 is a diagram illustrating a configuration of a server according to the first exemplary embodiment of the present disclosure;
Fig. 5 is a sequence diagram illustrating communication between the mobile device and the multifunction peripheral according to the first exemplary embodiment of the present disclosure;
Fig. 6 is a diagram illustrating a structure of data transmitted from the mobile device to the multifunction peripheral according to the first exemplary embodiment of the present disclosure;
Fig. 7 is a sequence diagram illustrating communication between a mobile device and a multifunction peripheral according to a second exemplary embodiment of the present disclosure; and
Fig. 8 is a diagram illustrating a structure of data transmitted from the mobile device to the multifunction peripheral according to the second exemplary embodiment of the present disclosure.

### DETAILED DESCRIPTION OF THE INVENTION

Hereinafter, examples of exemplary embodiments of the present disclosure will be described with reference to the drawings. The identical reference numerals are given to the identical or equivalent components and parts in each drawing. In addition, in some cases, a dimensional ratio of the drawing is exaggerated for convenience of description and is different from an actual ratio.

### [First Exemplary Embodiment]

### <Service Providing System 100>

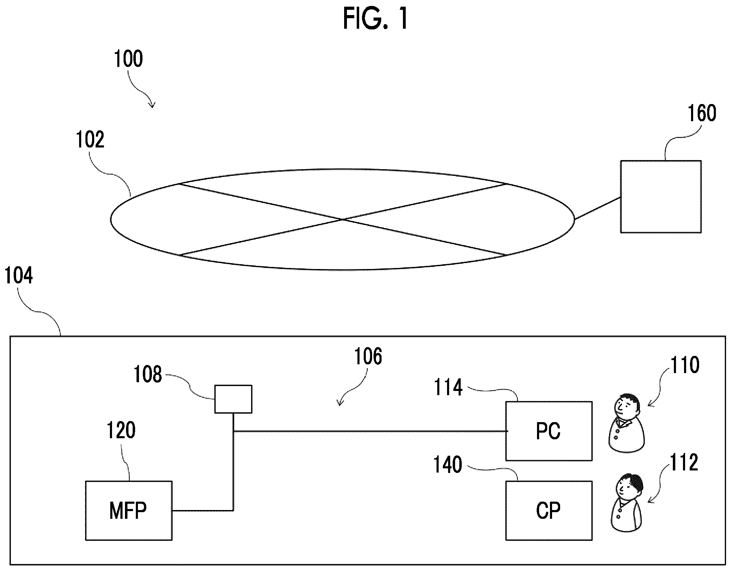

Fig. 1 is a diagram illustrating a system configuration of a service providing system 100 according to an exemplary embodiment of the present disclosure. As illustrated in Fig. 1, the service providing system 100 of the exemplary embodiment of the present disclosure includes a business office 104 in which a multifunction peripheral 120 is installed, the Internet 102, and an information server 160.

The business office 104 is a place at which a specific person is stationed and an unspecified person visits. The multifunction peripheral 120 installed in the business office 104 is connected to a local network 106. A DHCP server 108 is disposed in the local network 106, and a network including a computer 114, the multifunction peripheral 120, or other devices (not illustrated) is configured.

As illustrated in Fig. 1, the local network 106 is not connected to the Internet 102. That is, the computer 114, the multifunction peripheral 120, and the DHCP server 108 are not allowed to be connected to the Internet 102.

Fig. 1 illustrates, as an example, that the business office 104 has a resident person 110 and a non-resident person 112. The resident person 110 is a person belonging to the business office 104, and is a person who performs work in the business office 104 by using, for example, the computer 114 connected to the local network 106. The non-resident person 112 is a person who temporarily visits the business office 104, and is a person belonging to a head office that supervises the business office 104, as an example. The non-resident person 112 is an example of a "temporary user" in the present disclosure.

As illustrated in Fig. 1, the non-resident person 112 does not have an information device connected to the local network 106. The non-resident person 112 performs work by using the mobile device 140 provided at the head office (not illustrated) in the business office 104. The mobile device 140 is an example of an "information device" in the present disclosure.

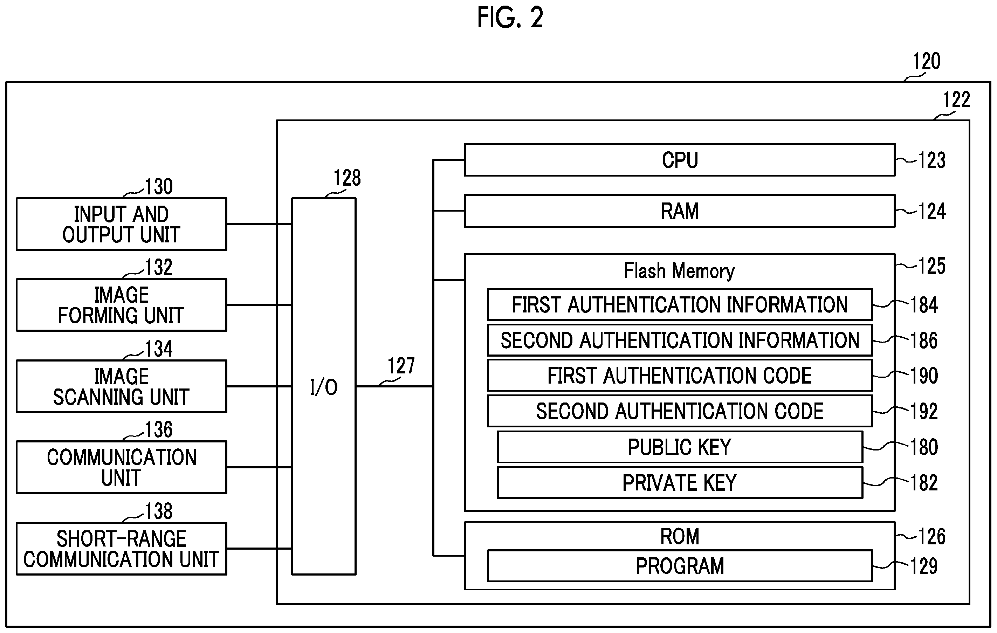

Next, configurations of the multifunction peripheral 120, the mobile device 140, and the information server 160 will be described with reference to Figs. 2 to 4.

### (Multifunction Peripheral 120)

The multifunction peripheral 120 is an example of an "information processing system" in the present disclosure. The multifunction peripheral 120 is an apparatus having a plurality of functions such as a printing function, a scanning function, a copying function, and a facsimile function.

Fig. 2 illustrates a block diagram illustrating a hardware configuration of the multifunction peripheral 120 according to the present exemplary embodiment. As illustrated in Fig. 2, the multifunction peripheral 120 includes a control unit 122, an input and output unit 130, an image forming unit 132, an image scanning unit 134, a communication unit 136, and a short-range communication unit 138. These components are connected to each other via an input and output interface (I/O) 128.

The control unit 122 is a device that controls each unit of the multifunction peripheral 120. The control unit 122 has a function as a computer, and as illustrated in Fig. 2, includes a central processing unit (CPU) 123, a random access memory (RAM) 124, a flash memory 125, and a read only memory (ROM) 126. The CPU 123, the RAM 124, the flash memory 125, and the ROM 126 are connected to each other via a control bus 127.

The CPU 123 is a central processing unit, communicates with other devices as will be described below, and executes various programs including a program 129 for executing a process or controls each unit. In addition, in the present exemplary embodiment, the CPU 123 is an example of a "processor" in the present disclosure. The ROM 126 stores various programs including the program 129 and various data. The RAM 124 temporarily stores the program 129 or the data as a work area. The flash memory 125 temporarily stores data and the like. In addition, the flash memory 125 is an example of a non-volatile memory. That is, the flash memory 125 retains the stored information even in a case where a current to the control unit 122 is interrupted (for example, in a case where power supply to the multifunction peripheral 120 is interrupted).

In the control unit 122, the CPU 123 reads various programs including the program 129 from the ROM 126, and executes the program 129 by using the RAM 124 as a work area. The CPU 123 executes the program 129 to realize various functions of controlling each unit of the multifunction peripheral 120.

The input and output unit 130 is a device that receives an instruction from a person who uses the multifunction peripheral 120 and notifies the CPU 123 of the control unit 122 of the received instruction. The input and output unit 130 is also a device that presents information to the person who uses the multifunction peripheral 120 in accordance with an instruction from the CPU 123. As the input and output unit 130, a device that both receives input and displays information, such as a touch panel, is used.

The image forming unit 132 is a configuration unit that forms an image on a recording medium such as paper. The image forming unit 132 forms an image on a recording medium using, for example, an electrophotographic method that performs charging, exposure, development, transfer, and fixing steps. The image forming unit 132 may form an image on the recording medium using other methods such as an ink jet method.

The image scanning unit 134 is a configuration unit (for example, a scanner) that scans an image of a document. The image scanning unit 134 generates image data by optically scanning the image of the document and converting the scanned image into a digital signal. In this description, as an example, it is assumed that the document includes text.

The communication unit 136 is a configuration unit for communicating with other devices via the local network 106. The communication unit 136 communicates with other devices by using communication means such as wired, wireless, the Internet 102, intranet, and public lines such as telephone lines. The communication means may be communication means using voice, light, vibration, images, or the like.

The short-range communication unit 138 is a configuration unit that communicates with a user who uses the multifunction peripheral 120 at a short range. The short-range communication unit 138 may have any configuration as long as an information device of the user who uses the multifunction peripheral 120 can be directly (that is, without using the local network 106) connected to the multifunction peripheral 120. Examples of the short-range communication include Wi-Fi Direct (registered trademark), Bluetooth (registered trademark), and the like.

In the multifunction peripheral 120, for example, the image scanning unit 134 scans an image of a document to generate image data, and thus a scan process by the scanning function is executed. Further, in the multifunction peripheral 120, for example, a facsimile process using the facsimile function is executed by transmitting the image data generated by scanning the image of the document through the image scanning unit 134 to another device such as another multifunction peripheral 120.

Here, as illustrated in Fig. 2, the flash memory 125 stores first authentication information data 184, first authentication code data 190, second authentication code data 192, public key data 180, and private key data 182.

The first authentication information data 184 is information for authenticating the computer 114 used by the resident person 110. Specifically, in a case where the resident person 110 attempts to print by using the multifunction peripheral 120, communication for transmitting a print job from the computer 114 is attempted. The multifunction peripheral 120 determines whether the use of the multifunction peripheral 120 is permitted from the computer 114 (that is, whether the resident person 110 is permitted to use the multifunction peripheral 120) based on the communication received from the computer 114 and the first authentication information data 184.

The public key data 180 and the private key data 182 are text string data used for encryption and decryption in an authentication method to be described below. The public key data 180 and the private key data 182 are prime numbers used in a so-called RSA encryption. That is, the public key data 180 is data indicating a prime number that can be easily known, and the private key data 182 is data indicating a concealed prime number.

The first authentication code data 190 is data indicating a predetermined first authentication code used in the authentication method to be described below. The first authentication code data 190 is data indicating a first authentication code which is an example of an "authentication code" according to the present disclosure. The first authentication code is a predetermined text string, which is a concealed text string in the same manner as the private key data 182. The first authentication code may be any text string.

The second authentication code data 192 is data indicating a predetermined second authentication code, in the same manner as the first authentication code data 190. The second authentication code data 192 is data indicating a second authentication code which is another example of the "authentication code" according to the present disclosure. The second authentication code is a predetermined text string, which is a concealed text string in the same manner as the private key data 182. The second authentication code may be any text string.

In addition, Fig. 2 illustrates that the flash memory 125 does not store second authentication information data 186 used for authenticating the mobile device 140 used by the non-resident person 112.

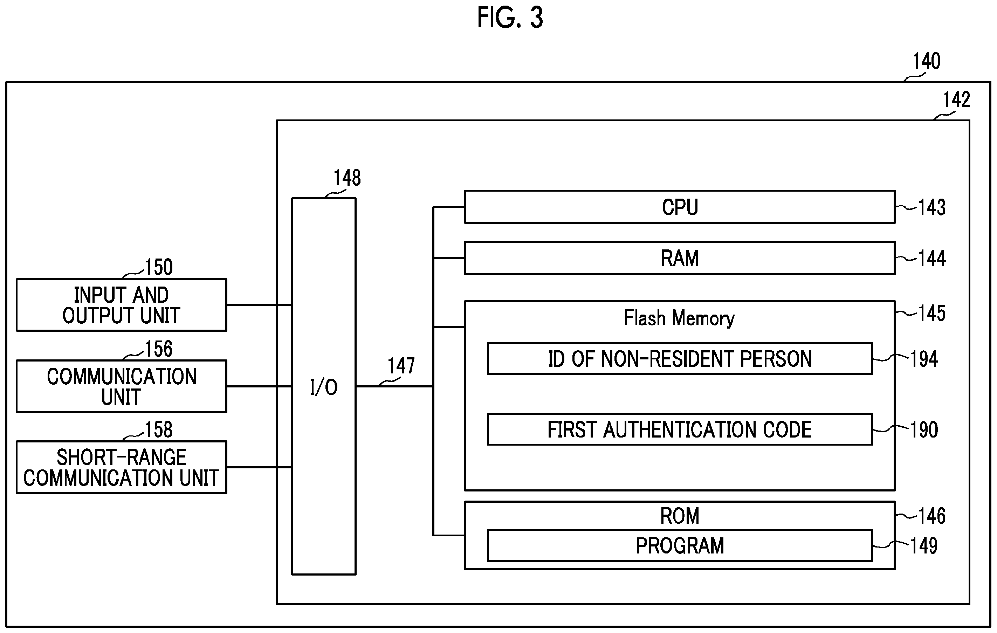

Fig. 3 illustrates a block diagram illustrating a hardware configuration of the mobile device 140 according to the present exemplary embodiment. As illustrated in Fig. 3, the mobile device 140 includes a control unit 142, an input and output unit 150, and a communication unit 156. These components are connected to each other via an input and output interface (I/O) 148. In hardware of the mobile device 140 illustrated in Fig. 3, the hardware having the same configuration name as the hardware of the multifunction peripheral 120 illustrated in Fig. 2 has the same function as each other. The configurations may not be described. Performance of the configurations described above may be different.

The control unit 142 is a device that controls each unit of the mobile device 140. The control unit 142 includes a function as a computer, and includes a CPU 143, a RAM 144, a flash memory 145, and a ROM 146 as illustrated in Fig. 3. The CPU 143, the RAM 144, the flash memory 145, and the ROM 146 are connected to each other via a control bus 147.

In the control unit 142, the CPU 143 reads out various programs 149 including the program 149 from the ROM 146, and executes the program 149 by using the RAM 144 as a work area. The CPU 143 executes the program 149 to implement various functions of controlling each unit of the mobile device 140.

The input and output unit 150 is a device that receives an instruction of a person who uses the mobile device 140, and notifies the received instruction to the CPU 143 of the control unit 142. Further, the input and output unit 150 is a device that presents information to the person who uses the mobile device 140 in accordance with an instruction of the CPU 143. As the input and output unit 150, a device that both receives input and displays information, such as a touch panel, is used.

The communication unit 156 is a configuration unit for performing wireless communication with a base station (not illustrated). That is, since the mobile device 140 communicates with the base station by mobile communication, the mobile device 140 is connected to the Internet 102 without passing through the local network 106. Examples of the mobile communication include a fourth generation mobile communication system (4G), a fifth generation mobile communication system (5G), and the like.

The short-range communication unit 158 is a configuration unit that directly communicates with the multifunction peripheral 120. The short-range communication unit 158 makes it possible for a user (that is, the non-resident person 112) who uses the mobile device 140 to connect to the multifunction peripheral 120 without using the local network 106.

In the mobile device 140, for example, it is possible to generate image data and transmit the image data to the multifunction peripheral 120 as a print job by a communication method that can be used by the short-range communication unit 158. A specific communication procedure will be described below.

As illustrated in Fig. 3, the flash memory 145 stores user identification data 194. The user identification data is data used to specify a person who uses the mobile device 140 (that is, the non-resident person 112).

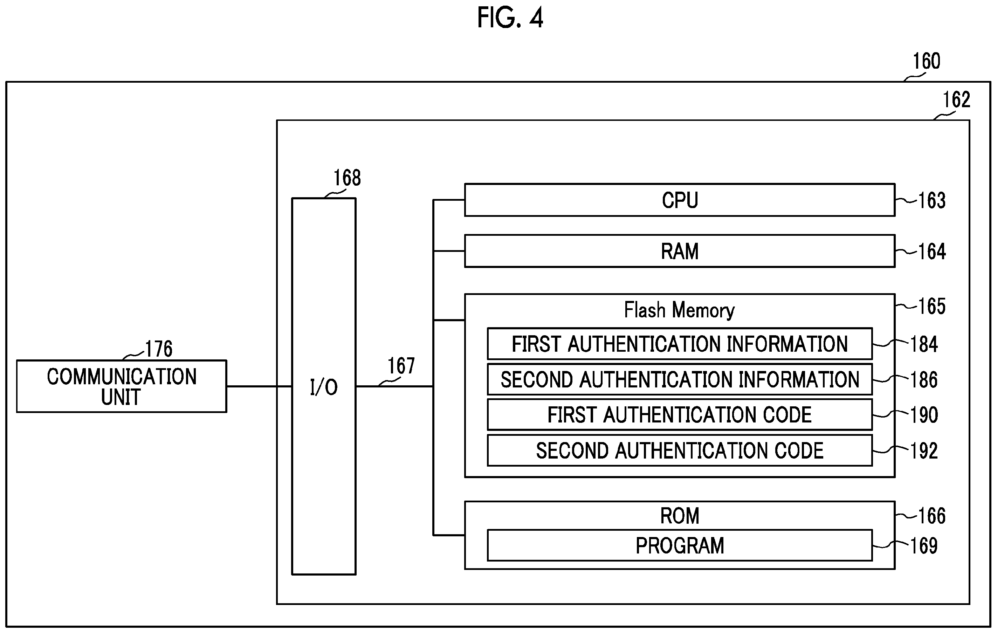

Fig. 4 illustrates a block diagram illustrating a hardware configuration of the information server 160 according to the present exemplary embodiment. As illustrated in Fig. 4, the information server 160 includes a control unit 162 and a communication unit 176. These components are connected to each other via an input and output interface (I/O) 168. In hardware of the information server 160 illustrated in Fig. 4, the hardware having the same configuration name as the hardware of the multifunction peripheral 120 illustrated in Fig. 2 has the same function as each other. The configurations may not be described. Performance of the configurations described above may be different.

The control unit 162 is a device that controls each unit of the information server 160. The control unit 162 includes a function as a computer, and includes a CPU 163, a RAM 164, a flash memory 165, and a ROM 166 as illustrated in Fig. 4. The CPU 163, the RAM 164, the flash memory 165, and the ROM 166 are connected to each other via a control bus 167.

In the control unit 162, the CPU 163 reads out various programs 169 including the program 169 from the ROM 166, and executes the program 169 by using the RAM 164 as a work area. The CPU 163 executes the program 169 to implement various functions of controlling each unit of the information server 160.

The communication unit 176 is a configuration unit for communicating with other devices via the Internet 102. The communication unit 176 may have any configuration as long as the communication unit 176 can be connected to the Internet 102. The communication means may be communication means using voice, light, vibration, images, or the like.

As illustrated in Fig. 4, the flash memory 165 stores the first authentication information data 184, the second authentication information data 186, the first authentication code data 190, and the second authentication code data 192.

The information server 160 is capable of notifying authentication information of an information device that communicates via the Internet 102. For example, in a case where the mobile device 140 requests the authentication information to the information server 160 together with the user identification data 194, the information server 160 notifies the mobile device 140 of the second authentication information data 186 based on the user identification data 194. For example, in a case where the computer 114 requests the information server 160 for the authentication information via some communication means together with user identification data of the resident person 110 (not illustrated), the information server 160 notifies the computer 114 of the first authentication information data 184 based on the user identification data.

### (Whether to Use Multifunction Peripheral 120 by Resident Person 110 and Non-resident Person 112)

In the situations illustrated in Figs. 1 and 2, the resident person 110 who uses the computer 114 transmits data such as a print job to the multifunction peripheral 120 from the computer 114 together with user identification data. The multifunction peripheral 120 determines whether or not to execute data such as a print job (that is, to execute printing) based on the received user identification data. More specifically, the multifunction peripheral 120 executes the job by collating the first authentication information data 184 stored in the flash memory 125 with the user identification data (not illustrated) of the resident person 110 received from the computer 114.

An administrator of the multifunction peripheral 120 in the business office 104 stores the first authentication information data 184. That is, the administrator of the multifunction peripheral 120 stores the first authentication information data 184 in the multifunction peripheral 120 for permitting the resident person 110 to use the multifunction peripheral 120.

On the other hand, as illustrated in Fig. 2, the administrator does not store the second authentication information data 186, which is authentication information of the non-resident person 112, in the flash memory 125. This is for the purpose of managing a workload of the administrator while improving efficiency of the operation, and thus, there is no need to record the authentication information of the non-resident person 112, that is, the person who is not usually resident, in the multifunction peripheral 120.

Therefore, in the situations illustrated in Figs. 1 and 2, the non-resident person 112 cannot use the multifunction peripheral 120. Even in a case where a print job or the like is transmitted from the mobile device 140 to the multifunction peripheral 120, the multifunction peripheral 120 does not execute the job for the reason that the second authentication information data 186 corresponding to the authentication information received from the mobile device 140 is not present.

For example, since the multifunction peripheral 120 can be used even in a case where there is no authentication information of the non-resident person 112, the administrator may consider setting the multifunction peripheral 120 not to perform authentication based on authentication information data and user identification data. Meanwhile, in a case where the setting is made such that the authentication based on the authentication information data and the user identification data is not performed, a third party can use the multifunction peripheral 120, which is not preferable from the viewpoint of security.

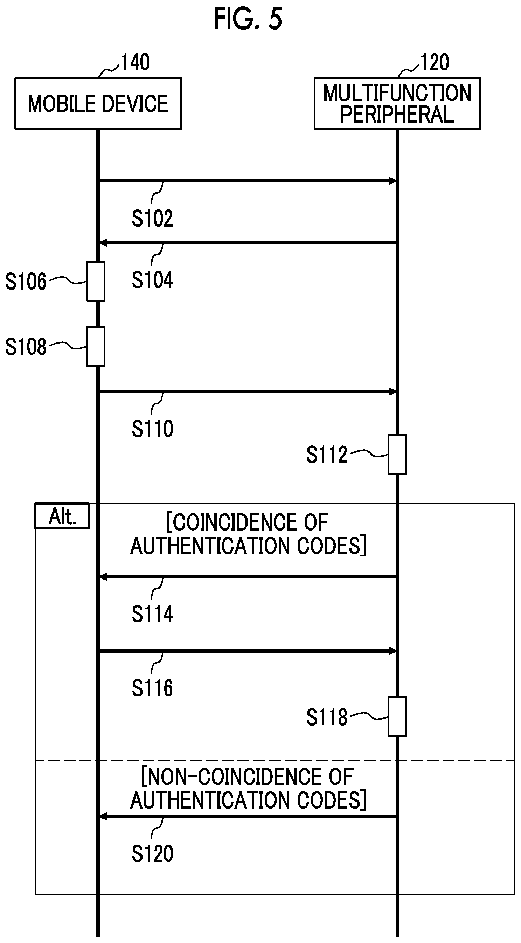

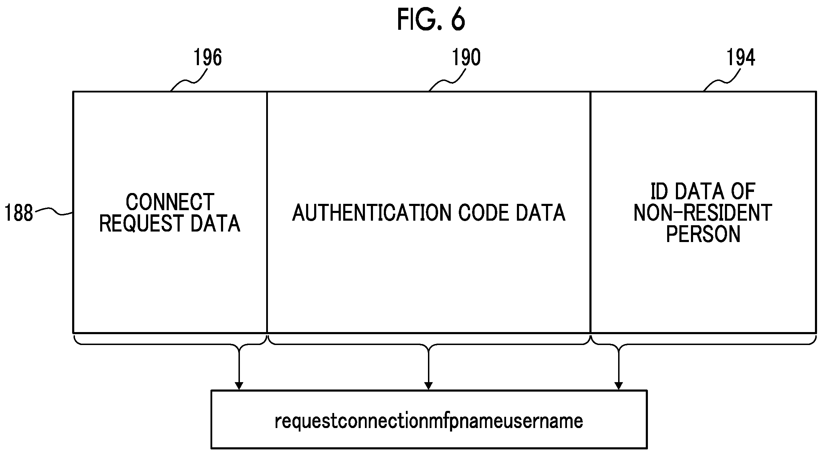

Here, in the service providing system 100 according to the present exemplary embodiment, the non-resident person 112 can also use the multifunction peripheral 120 based on the following procedure. As an example of the procedure in which the non-resident person 112 uses the multifunction peripheral 120, a procedure for causing the multifunction peripheral 120 to execute a print job will be described with reference to Figs. 5 and 6. The procedure illustrated in Figs. 5 and 6 is processed by the CPU 123 of the multifunction peripheral 120 executing the program 129 and the CPU 143 of the mobile device 140 executing the program 149. In the present procedure, it is assumed that the non-resident person 112 is notified of a first authentication code in advance by the administrator of the multifunction peripheral 120.

### (Authentication Method and Job Execution Method)

Fig. 5 is a sequence diagram illustrating an authentication method and a job execution method according to the present exemplary embodiment. As illustrated in Fig. 5, the mobile device 140 and the multifunction peripheral 120 communicate with each other. Specifically, the mobile device 140 and the multifunction peripheral 120 directly communicate with each other by using the short-range communication unit 138 and the short-range communication unit 158, respectively.

First, in step S102, the mobile device 140 requests the multifunction peripheral 120 to perform authentication. As an example in this step, the mobile device 140 transmits a small amount of packet data to the multifunction peripheral 120. That is, the multifunction peripheral 120 receives the small amount of packet data from the mobile device 140. The small amount of packet data is an example of a "synchronization notification" in the present disclosure.

Next, in step S104, the multifunction peripheral 120 transmits the public key data 180 stored in the flash memory 125 to the mobile device 140. The public key data 180 is transmitted as, for example, a plaintext (that is, an unencrypted text string).

Next, in step S106, the mobile device 140 creates a connection request data set 188 that is a data set including data for requesting a connection. Specifically, as illustrated in Fig. 6, the mobile device 140 creates the connection request data set 188 by coupling the connection request data 196, which is data for requesting a connection, the first authentication code data 190, which is data indicating a first authentication code, and the user identification data 194, which is data indicating identification information of the non-resident person 112, as one text string data. The user identification data 194 is an example of "specific information" in the present disclosure.

As illustrated in Fig. 6, the connection request data 196, the first authentication code data 190, and the user identification data 194 are coupled as a text string in which a delimiter is not clearly defined. For example, Fig. 6 illustrates that there is no delimiter text between each data. In addition, Fig. 6 illustrates that there is no text indicating the first and last of the connection request data 196, the first authentication code data 190, and the user identification data 194. In Fig. 6, for convenience, a text string is illustrated by connecting simple English words. Meanwhile, for example, it is preferable that each data is based on a text string that does not have meaning (that is, is not listed in any dictionary).

Next, in step S108, the mobile device 140 encrypts the connection request data set 188 based on a public key to create an encryption data set. That is, the mobile device 140 encrypts the connection request data 196, the first authentication code data 190, and the user identification data 194 based on the public key.

Next, in step S110, the mobile device 140 transmits the encryption data set to the multifunction peripheral 120. In other words, the mobile device 140 couples the connection request data 196, the first authentication code data 190, and the user identification data 194 as one text string, and then further encrypts the coupled text string, and transmits the encrypted text string to the multifunction peripheral 120. That is, the multifunction peripheral 120 receives the encryption data set from the mobile device 140.

Next, in step S112, the multifunction peripheral 120 verifies the encryption data set. Specifically, the multifunction peripheral 120 decrypts the encryption data set based on a private key to create the connection request data set 188. In addition, the multifunction peripheral 120 determines whether or not an authentication code is included in the connection request data set 188. More specifically, the multifunction peripheral 120 searches for a text string of the connection request data set 188 with the authentication code stored in the flash memory 125, and determines whether or not the authentication code is included in the connection request data set 188.

In a case where it is determined that the text string of the decrypted connection request data set 188 includes a text string identical to the authentication code in step S112, the multifunction peripheral 120 notifies the mobile device 140 of a notification for approving a connection request as step S114. In other words, the multifunction peripheral 120 approves the connection request in a case where the authentication code indicated from the administrator to the non-resident person 112 and stored in the mobile device 140 coincides with the authentication code stored in the flash memory 125. In the example of the present description, since the first authentication code data 190 is included in the connection request data set 188, the multifunction peripheral 120 approves the connection request. That is, a case where it is determined in step S112 whether or not the authentication code is included in the connection request data set 188 and the connection request is approved in a case where the authentication code is included is an example of an "authentication operation" in the present exemplary embodiment.

Next, the mobile device 140 checks that the connection request is approved in step S114 as step S116, and transmits a print job to the multifunction peripheral 120. That is, the multifunction peripheral 120 receives the print job from the mobile device 140.

Next, the multifunction peripheral 120 executes the print job received in step S116 as step S118. Specifically, the multifunction peripheral 120 executes printing of an image based on image data included in the print job.

In step S118, the multifunction peripheral 120 stores the fact that the print job is executed in the flash memory 125, as a history. Specifically, the multifunction peripheral 120 determines that the other text strings excluding the connection request data 196 and the first authentication code data 190 in the connection request data set 188 decrypted in step S112 as the user identification data 194.

The multifunction peripheral 120 stores the fact that the print job is executed in association with the user identification data 194, in the flash memory 125.

Meanwhile, the history stored in the multifunction peripheral 120 does not include authentication information of the non-resident person 112. That is, for example, it is preferable that the multifunction peripheral 120 does not store the second authentication information data 186, which is the authentication information of the non-resident person 112 who uses the mobile device 140, in the flash memory 125. The same applies even in a case where the multifunction peripheral 120 is capable of creating the second authentication information data 186 or in a case where the same information as the second authentication information data 186 is received together with the print job.

In a case where it is determined that the text string of the decrypted connection request data set 188 does not include a text string identical to the authentication code in step S112, the multifunction peripheral 120 notifies the mobile device 140 of a notification for rejecting the connection request as step S120. In other words, the multifunction peripheral 120 rejects the connection request in a case where the authentication code stored in the mobile device 140 does not coincide with the authentication code stored in the flash memory 125.

Next, the action and effect of the service providing system 100 and the multifunction peripheral 120 according to the present exemplary embodiment will be described.

### (Actions and Effects)

The multifunction peripheral 120 according to the present exemplary embodiment causes the CPU 123 to receive a connection request from the mobile device 140 possessed by the non-resident person 112. The CPU 123 checks whether or not the connection request received from the mobile device 140 includes an authentication code, and executes an authentication operation in a case where the connection request includes the authentication code.

Therefore, according to the multifunction peripheral 120 according to the present exemplary embodiment, the authentication operation can be performed for the non-resident person 112 whose user authorization is not stored in the multifunction peripheral 120 and cannot be acquired from an outside. In other words, according to the multifunction peripheral 120 according to the present exemplary embodiment, the security for the non-resident person 112 can be improved even for the multifunction peripheral 120 that operates in a standalone state.

In addition, the multifunction peripheral 120 causes the CPU 123 to receive the connection request encrypted by the mobile device 140. The CPU 123 decrypts the encrypted connection request to check the authentication code in the connection request. Therefore, according to the multifunction peripheral 120 according to the present exemplary embodiment, a security level for the authentication code included in the connection request is improved.

In addition, in a case where a synchronization notification is received from the mobile device 140, the multifunction peripheral 120 transmits the public key data 180 to the mobile device 140. Therefore, according to the multifunction peripheral 120 according to the present exemplary embodiment, communication for obtaining key information used for the decryption is not necessary. In other words, the multifunction peripheral 120 can determine a key to be used for decryption without a prior agreement with the mobile device 140.

Further, the multifunction peripheral 120 receives the connection request in a state in which the authentication code and another data string are coupled. Therefore, according to the multifunction peripheral 120 according to the present exemplary embodiment, the security level for the authentication code can be improved as compared with a case where the authentication code and the other data string are received in a state in which the authentication code and the other data string are separable from each other.

In a case where the authentication operation is executed, the multifunction peripheral 120 stores the user identification data 194 for specifying a user as the non-resident person 112. In other words, in the multifunction peripheral 120 according to the present exemplary embodiment, an administrator of the multifunction peripheral 120 can grasp contents used after the user specifies the user of the multifunction peripheral 120. Therefore, according to the multifunction peripheral 120 according to the present exemplary embodiment, the security level is improved as compared with a case where the user identification data 194 is not stored.

### (Modification Example)

In the above description, a method for the mobile device 140 to know a destination of the multifunction peripheral 120 is not particularly limited in order for the mobile device 140 to request the multifunction peripheral 120 to start communication. For example, the method includes a method in which the mobile device 140 scans a two-dimensional code attached to the multifunction peripheral 120 and accesses an address indicated by the two-dimensional code. For example, there is a method of accessing an address indicated by an RFID (Radio Frequency IDentification) tag attached to the multifunction peripheral 120 by the mobile device 140 scanning the RFID tag.

Next, the service providing system 100 according to a second exemplary embodiment of the present disclosure will be described. Since a specific configuration of the service providing system 100 in the present exemplary embodiment is the same as the configuration in the first exemplary embodiment, the description of the configuration will be omitted.

### [Second Exemplary Embodiment]

### (Authentication Method and Job Execution Method)

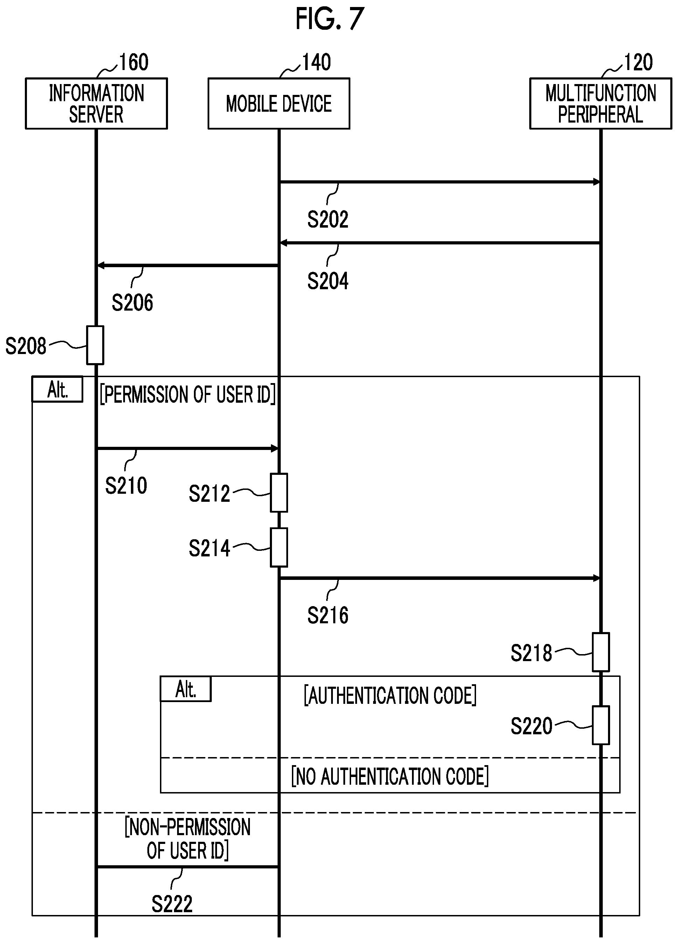

Fig. 7 is a sequence diagram illustrating an authentication method and a job execution method according to the present exemplary embodiment. As illustrated in Fig. 7, the mobile device 140 communicates with the multifunction peripheral 120 and the information server 160. Specifically, the mobile device 140 and the multifunction peripheral 120 directly communicate with each other by using the short-range communication unit 138 and the short-range communication unit 158, respectively. The mobile device 140 and the information server 160 are connected to each other via the Internet 102 by using the communication unit 136 and the communication unit 136, respectively.

First, in step S202, the mobile device 140 requests the multifunction peripheral 120 to perform authentication. As an example in this step, the mobile device 140 transmits a small amount of packet data to the multifunction peripheral 120. That is, the multifunction peripheral 120 receives the small amount of packet data from the mobile device 140.

Next, in step S204, the multifunction peripheral 120 transmits the public key data 180 stored in the flash memory 125 and a serial number of the multifunction peripheral 120 to the mobile device 140. The public key data 180 and the serial number of the multifunction peripheral 120 are transmitted as a plaintext (that is, an unencrypted text string) as an example.

Next, in step S206, the mobile device 140 transmits a authentication code request data set to the information server 160. Specifically, the mobile device 140 transmits the serial number received from the multifunction peripheral 120 and the user identification data 194 of the non-resident person 112 to the information server 160.

Next, in step S208, the information server 160 verifies the authentication code request data set. Specifically, the information server 160 collates the user identification data 194 included in the authentication code request data set with authentication information of a user corresponding to the identification information. In the example illustrated in Fig. 4, since the information server 160 has the second authentication information data 186 which is the authentication information of the non-resident person 112, the information server 160 determines whether or not the non-resident person 112 can use the multifunction peripheral 120, based on the second authentication information data 186.

In a case where the use of the multifunction peripheral 120 is permitted from the first authentication code data 190 set examined in step S208, the information server 160 notifies the mobile device 140 of an authentication code as step S210. Specifically, the information server 160 notifies the mobile device 140 of the first authentication code data 190.

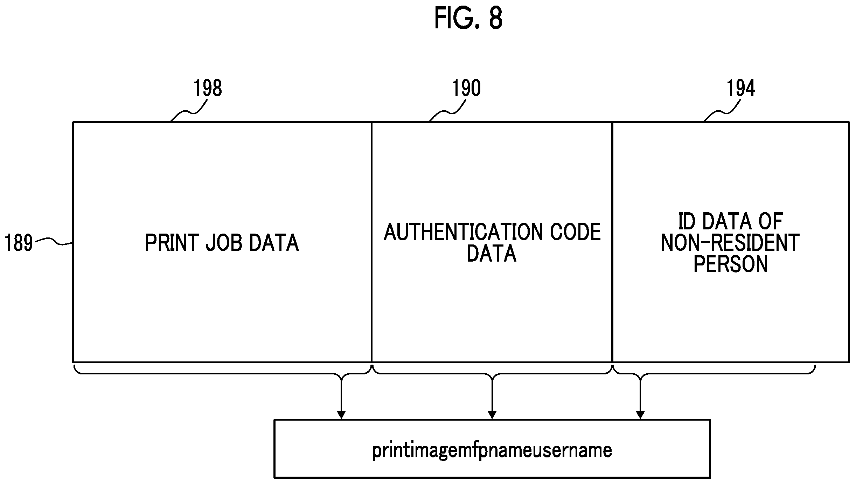

Next, in step S212, the mobile device 140 creates a printing request data set 189 that is a data set including data for requesting execution of a print job. Specifically, as illustrated in Fig. 8, the mobile device 140 creates the connection request data set 188 by coupling the print job data 198, the first authentication code data 190, and the user identification data 194 of the non-resident person 112 as one text string data. Also in the present exemplary embodiment, as illustrated in Fig. 8, the print job data 198, the first authentication code data 190, and the user identification data 194 are coupled as a text string in which a delimiter is not clearly defined.

Next, in step S214, the mobile device 140 encrypts the printing request data set 189 based on a public key to create an encryption data set. That is, the mobile device 140 encrypts the print job data 198, the first authentication code data 190, and the user identification data 194 based on the public key.

Next, in step S216, the mobile device 140 transmits the encryption data set to the multifunction peripheral 120. In other words, the mobile device 140 couples the print job data 198, the first authentication code data 190, and the user identification data 194 as one text string, and then further encrypts the coupled text string, and transmits the encrypted text string to the multifunction peripheral 120. That is, the multifunction peripheral 120 receives the encryption data set from the mobile device 140.

Next, in step S218, the multifunction peripheral 120 verifies the encryption data set. Specifically, the multifunction peripheral 120 decrypts the encryption data set based on a private key to create the printing request data set 189. In addition, the multifunction peripheral 120 determines whether or not the authentication code is included in the printing request data set 189. More specifically, the multifunction peripheral 120 searches for a text string of the printing request data set 189 with the authentication code stored in the flash memory 125, and determines whether or not the authentication code is included in the printing request data set 189.

Then, in a case where it is determined that the text string of the printing request data set 189, which is decrypted in step S218, includes a text string identical to the authentication code, the multifunction peripheral 120 executes the print job as step S220. In other words, the multifunction peripheral 120 executes the print job in a case where the authentication code transmitted from the information server 160 to the mobile device 140 coincides with the authentication code stored in the flash memory 125. Specifically, the multifunction peripheral 120 executes printing of an image based on image data included in the print job. In the example of the present description, since the first authentication code data 190 is included in the printing request data set 189, the multifunction peripheral 120 approves a printing request. That is, a case where it is determined in step S218 whether or not the authentication code is included in the printing request data set 189 and the print job is executed in a case where the authentication code is included is an example of the "authentication operation" in the present exemplary embodiment.

In the same manner as in step S212 of the first exemplary embodiment, the multifunction peripheral 120 stores the fact that the print job is executed in step S220 in the flash memory 125, as a history. Specifically, the multifunction peripheral 120 determines that the other text strings excluding the print job data 198 and the first authentication code data 190 in the printing request data set 189 decrypted in step S218 are the user identification data 194. The multifunction peripheral 120 stores the fact that the print job is executed in association with the user identification data 194, in the flash memory 125.

In a case where the determination is made that the text string of the printing request data set 189, which is decrypted in step S218, does not include a text string identical to the authentication code, the multifunction peripheral 120 discards the printing request data set 189. That is, the multifunction peripheral 120 does not execute the print job.

In addition, in step S208, in a case where it is determined that the user identification data 194 included in the authentication code request data set and the authentication information of the user corresponding to the user identification data 194 cannot be collated, the information server 160 notifies the mobile device 140 of a notification of rejecting the use request as step S222. In other words, the information server 160 rejects the use request in a case where the non-resident person 112 is not permitted to use the multifunction peripheral 120. In this case, as described above, the multifunction peripheral 120 determines that the text string of the printing request data set 189 from the user whose the use request is rejected does not include a text string identical to the authentication code. Therefore, in a case where the printing request data set 189 is received from the user whose the use request is rejected, the multifunction peripheral 120 discards the printing request data set 189.

Next, the action and effect of the service providing system 100 and the multifunction peripheral 120 according to the present exemplary embodiment will be described.

### (Actions and Effects)

Also in the multifunction peripheral 120 according to the present exemplary embodiment, the CPU 123 receives a connection request from the mobile device 140 possessed by the non-resident person 112. The CPU 123 checks whether or not the connection request received from the mobile device 140 includes an authentication code, and executes an authentication operation in a case where the connection request includes the authentication code.

Therefore, in the multifunction peripheral 120 according to the present exemplary embodiment, the security for the non-resident person 112 can be improved for the multifunction peripheral 120 that operates in a standalone state.

### (Modification Example)

In the above description, the operation of the information server 160 in a case where the communication is received from the mobile device 140 used by the non-resident person 112 is described. In the present exemplary embodiment, in a case of receiving a communication from the computer 114 used by the resident person 110 through any line in the same manner as the communication in step S206, the information server 160 may perform an operation different from the above description.

Specifically, as illustrated in Fig. 4, in a case of receiving the communication from the computer 114 used by the resident person 110 by some communication means, the information server 160 may transmit a second authentication code different from the first authentication code as step S210. In step S220, the multifunction peripheral 120 may perform different operations in a case where the first authentication code is detected in step S218 and in a case where the second authentication code is detected in step S218. For example, the number of prints may be limited, or the number of sheets of printing paper may be limited. That is, all of these different operations are examples of the "authentication operation" in the present disclosure.

In this manner, the multifunction peripheral 120 according to this modification example causes the CPU 123 to execute a different authentication operation based on the authentication code included in the printing request data set 189. Therefore, according to the information processing system according to this aspect, it is possible to perform the authentication operation corresponding to the use mode of the multifunction peripheral 120, as compared with a case where the authentication code and the corresponding authentication operation are one.

Further, the multifunction peripheral 120 according to this modification example determines a process that can be used by the user, based on a type of the authentication code received from the mobile device 140. Therefore, according to the multifunction peripheral 120 according to this modification example, the authority can be set according to the user who uses the multifunction peripheral 120.

### [Other Exemplary Embodiments]

In the above description, the case where the multifunction peripheral 120 executes the print job is described. Meanwhile, the use method of the multifunction peripheral 120 in the present disclosure is not limited to this. For example, there are the execution of the print job, the execution of the scanning function, the execution of the copying function, and the like. Therefore, instead of executing printing as described above, the use permission of the scanning function and the use permission of the copying function may be used as the purpose of use.

In the above description, the use is permitted in a case where the authentication code is included in the data that is transmitted. Meanwhile, the operation of the multifunction peripheral 120 in the present disclosure is not limited to this. For example, in a case where the authentication code is included in the data to which the authentication code is transmitted, the use may be prohibited. That is, the specific operation to be executed in a case where the authentication code is included is not limited.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In addition, in each of the exemplary embodiments described above, the aspect in which the program 129, the program 149, and the program 169 are stored (installed) in advance in the flash memory 125, the flash memory 145, and the flash memory 165 is described, but the present invention is not limited thereto. The program 129, the program 149, and the program 169 may be provided in a form stored on a non-transitory storage medium such as a compact disk read only memory (CD-ROM), a digital versatile disk read only memory (DVD-ROM), and a Universal Serial Bus (USB) memory. The program 129, the program 149, and the program 169 may be downloaded from an external apparatus via a network.

Although the exemplary embodiments of the present disclosure have been described above with reference to the accompanying drawings, it is clear that anyone with ordinary knowledge in the field of the art to which the present disclosure belongs can come up with various modifications or applications within the scope of the technical ideas described in the claims, and it is understood that these also naturally belong to the technical scope of the present disclosure.

The aspects of the present disclosure will be further described below.
(((1))) An information processing system comprising:
   a processor configured to:
   receive a connection request from an information device possessed by a user who temporarily uses the information device; and
   perform an authentication operation in a case where the connection request received from the information device includes an authentication code.
(((2))) The information processing system according to (((1))), wherein the processor is configured to:
   receive the connection request encrypted by the information device; and
   decrypt the connection request to check the authentication code included in the connection request.
(((3))) The information processing system according to (((2))), wherein the processor is configured to:
   in a case where a synchronization notification is received from the information device, notify the information device of a public key to be used for encryption.
(((4))) The information processing system according to (((2))) or (((3))), wherein the processor is configured to:
   receive a data string in which another data string included in the connection request is coupled with the authentication code, as the connection request.
(((5))) The information processing system according to any one of (((1))) to (((4))), wherein the processor is configured to:
   in a case where the authentication operation is executed, store specific information for specifying the user.
(((6))) The information processing system according to any one of (((1))) to (((5))), wherein the processor is configured to:
   execute a different authentication operation based on the authentication code included in the connection request.
(((7))) The information processing system according to (((6))), wherein the processor is configured to:
   determine a process that is available to the user, based on the authentication code included in the connection request.
(((8))) A program causing a processor to execute:
   receiving a connection request from an information device possessed by a user who temporarily uses the information device; and
   performing an authentication operation in a case where the connection request received from the information device includes an authentication code.

With the information processing system according to (((1)))), it is possible to perform an authentication operation for the temporary user whose user authorization is not stored in the information processing system and cannot be acquired from an outside.

With the information processing system according to (((2))), a security level for the authentication code included in the connection request is improved.

With the information processing system according to (((3))), a communication for obtaining key information to be used for the decryption is not necessary.

With the information processing system according to (((4))), it is possible to improve the security level for the authentication code of the information processing system, as compared with a case where the authentication code and the other data string are received in a state in which the authentication code and the other data string are separable.

With the information processing system according to (((5))), it is possible to perform the authentication operation according to a use mode, as compared with a case where the specific information is not stored.

With the information processing system according to (((6))), it is possible to improve the security level of the information processing system, as compared with a case where the authentication operation corresponding to the authentication code is one.

With the information processing system according to (((7))), it is possible to set an authority according to the user who uses the information processing system.

With the program according to (((8))), it is possible to cause the processor to perform the authentication operation for the temporary user whose user authorization is not stored in the information processing system and cannot be acquired from the outside.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

100: service providing system
102: Internet
104: business office
106: local network
108: DHCP server
110: resident person
112: non-resident person (example of user who temporarily uses)
114: computer
120: multifunction peripheral (example of information processing system)
122: control unit
123: CPU (example of processor)
124: RAM
125: flash memory
126: ROM
127: control bus
128: input and output interface
129: program
130: input and output unit
132: image forming unit
134: image scanning unit
136: communication unit
138: short-range communication unit
140: mobile device (example of information device)
142: control unit
143: CPU
144: RAM
145: flash memory
146: ROM
147: control bus
148: input and output interface
149: program
150: input and output unit
156: communication unit
158: short-range communication unit
160: information server
162: control unit
163: CPU
164: RAM
165: flash memory
166: ROM
167: control bus
168: input and output interface
169: program
176: communication unit
180: public key data
182: private key data
184: first authentication information data
186: second authentication information data
188: connection request data set
189: printing request data set
190: first authentication code data (example of authentication code)
192: second authentication code data (example of authentication code)
194: user identification data (example of specific information)
196: connection request data
198: print job data

## Claims

1. An information processing system comprising:
a processor configured to:
receive a connection request from an information device possessed by a user who temporarily uses the information device; and
perform an authentication operation in a case where the connection request received from the information device includes an authentication code.

2. The information processing system according to claim 1, wherein the processor is configured to:
receive the connection request encrypted by the information device; and
decrypt the connection request to check the authentication code included in the connection request.

3. The information processing system according to claim 2, wherein the processor is configured to:
in a case where a synchronization notification is received from the information device, notify the information device of a public key to be used for encryption.

4. The information processing system according to claim 2 or 3, wherein the processor is configured to:
receive a data string in which another data string included in the connection request is coupled with the authentication code, as the connection request.

5. The information processing system according to any one of claims 1 to 4, wherein the processor is configured to:
in a case where the authentication operation is executed, store specific information for specifying the user.

6. The information processing system according to any one of claims 1 to 5, wherein the processor is configured to:
execute a different authentication operation based on the authentication code included in the connection request.

7. The information processing system according to claim 6, wherein the processor is configured to:
determine a process that is available to the user, based on the authentication code included in the connection request.

8. A program causing a processor to execute:
receiving a connection request from an information device possessed by a user who temporarily uses the information device; and
performing an authentication operation in a case where the connection request received from the information device includes an authentication code.

9. An information processing method comprising:
receiving a connection request from an information device possessed by a user who temporarily uses the information device; and
performing an authentication operation in a case where the connection request received from the information device includes an authentication code.

## Amended claims

### Amended claims in accordance with Rule 137(2) EPC.

1. An information processing system (120) comprising:
a processor (123) configured to:
receive a connection request from an information device (140) possessed by a user (112) who temporarily uses the information device (140);
the information processing system (120) being **characterized in that** the processor (123) is further configured to:
not store authentication information of the user (112) for authenticating the information device (140), and
perform an authentication operation based on an authentication code (190) in response to determining that the connection request received from the information device (140) includes the authentication code (190).

2. The information processing system (120) according to claim 1, wherein the processor (123) is configured to:
receive the connection request encrypted by the information device (140); and
decrypt the connection request to check the authentication code (190) included in the connection request.

3. The information processing system (120) according to claim 2, wherein the processor (123) is configured to:
in a case where a synchronization notification is received from the information device (140), notify the information device (140) of a public key to be used for encryption.

4. The information processing system (120) according to claim 2 or 3, wherein the processor (123) is configured to:
receive a data string in which another data string included in the connection request is coupled with the authentication code (190), as the connection request.

5. The information processing system (120) according to any one of claims 1 to 4, wherein the processor (123) is configured to:
in a case where the authentication operation is executed, store specific information (194) for specifying the user (112).

6. The information processing system (120) according to any one of claims 1 to 5, wherein the processor (123) is configured to:
execute a different authentication operation based on the authentication code (190) included in the connection request.

7. The information processing system (120) according to claim 6, wherein the processor (123) is configured to:
determine a process that is available to the user, based on the authentication code (190) included in the connection request.

8. A program causing a processor (123) to execute:
receiving a connection request from an information device (140) possessed by a user (112) who temporarily uses the information device;
the program being **characterized in** further causing the processor (123) to execute:
not storing authentication information of the user (112) for authenticating the information device (140); and
performing an authentication operation based on an authentication code (190) in response to determining that the connection request received from the information device (140) includes the authentication code (190).

9. An information processing method comprising:
receiving a connection request from an information device (140) possessed by a user (112) who temporarily uses the information device (140);
the information processing method being **characterized in that** it further comprises:
not storing authentication information of the user (112) for authenticating the information device (140); and
performing an authentication operation based on an authentication code (190) in response to determining that the connection request received from the information device (140) includes the authentication code (190).
